# EUROPÄISCHE PATENTSCHRIFT

(11) **EP 2 159 463 B1**
(45) Veröffentlichungstag und Bekanntmachung des Hinweises auf die Patenterteilung: **13.10.2010**
(21) Anmeldenummer: 08015020.4
(22) Anmeldetag: 26.08.2008
(51) Int. Cl.: F16L 5/10, C08J 5/12, C09K 3/10, H02G 3/22

(54) **Leitungsdurchführung mit Kombinationswerkstoff**
Conduit lead-through with combination material
Passage de ligne doté d'une matière première de combinaison

(43) Veröffentlichungstag der Anmeldung: 03.03.2010
(73) Patentinhaber: Hauff-Technik GmbH & Co. KG, 89542 Herbrechtingen (DE)
(72) Erfinder: Seibold, Michael, Dr., 89134 Blaustein (DE); Kurz, Ralf, 89537 Giengen (DE)
(74) Vertreter: Szynka, Dirk

(56) Entgegenhaltungen:
- WO-A-96/09483
- DE-U1-202007 002 809

## Beschreibung

Diese Erfindung bezieht sich auf eine Leitungsdurchführung zum Aufbauen eines dichtenden Verschlusses in einer Wandöffnung, die von einer Leitung durchsetzt ist oder durchsetzt werden soll.

Eine solche Leitungsdurchführung ist in DE 20 2007 002809 U1 offenbart.

Wenn Leitungen durch Wände geführt werden, muss in vielen Fällen die dafür vorgesehene Öffnung gegen Flüssigkeiten und/oder Gase abgedichtet werden, wofür sog. Leitungsdurchführungen eingesetzt werden. Dies kann unterschiedlichste Wände betreffen, etwa Gebäudewände. Leitungsdurchführungen sind zudem auch für das dichte Hindurchführen von Leitungen durch andere Wände als Gebäudewände bekannt, etwa bei Schiffen etc. Eine Wand im Sinne der Erfindung ist also eine dichte Begrenzung eines Bereichs. Dabei sind Innen- oder Außenwände beispielsweise von Luft-, Wasser-, Raum- oder Landfahrzeugen, von Maschinen oder technischen Anlagen inbegriffen, wobei die Abdichtung Flüssigkeiten und/oder Gase betreffen kann.

Es kann sich aber auch um Gehäusewände von technischen Geräten handeln, etwa aus Metall oder Polymermaterialien. Die Leitung ist vorzugsweise eine Strom-, Gas-, Wasser-, Wärrne-, Telekommunikations- oder anderweitige Signal- oder Datenleitung. Die Leitung kann starr oder flexibel sein.

Die Erfindung bezieht sich dabei auch auf geschlossene Leitungsdurchführungen, die lediglich die Option für einen Leitungsdurchtütt bildende Wandöffnungen verschließen; wenn hier also von einer die Öffnungen durchsetzenden Leitung die Rede ist, kann sich dies auch auf eine in diesem Sinn optionale zukünftige Leitung beziehen.

Konventionellerweise kommen in Leitungsdurchführungen Elastomere zum Einsatz, die entweder über eine Verpressung oder aber über eine Elastomerdehnung in eine dichtende Anlage mit Dichtflächen seitens der durchzuführenden Leitung und auch seitens der Wandöffnung gebracht werden. In diesem Zusammenhang wird übrigens im Folgenden nur noch von der Leitung und der Wandöffnung gesprochen, obwohl beispielsweise auch Rohrstücke abgedichtet werden können, die ihrerseits die Leitung aufnehmen, hier aber in dem allgemeinen Begriff der "Leitung" beinhaltet sein sollen. Auch können in die Wandöffnung noch weitere Elemente eingesetzt werden, die eine eigenständige Laibung aufbauen, insbesondere Metallrahmen. Wenn von Dichtflächen der Wandöffnung bzw. von der Wandöffnung selbst die Rede ist, sollen auch solche Fälle inbegriffen sein. Bevorzugt richtet sich die Erfindung allerdings auf Leitungsdurchführungen, die die eigentliche Leitung selbst aufnehmen und dichten bzw. in die Wandöffnung selbst direkt eingesetzt sind.

Die für die Dichteigenschaften verantwordichen Elastomerelemente von konventionellen Leitungsdurchführungen müssen hinsichtlich der Leitungsmaße und auch der Wandöffnungsmaße relativ genau passen, weil bei der Verpressung oder dem Dehnen von Elastomeren nur begrenzte geometrische Toleranzen überbrückt werden können, wenn einwandfreie Dichteigenschaften gewährt sein müssen. Im Übrigen setzen dichtende Anlagen von Elastomeren eine gewisse Oberflächengüte der In Anlage zu bringenden Dichtfläche voraus.

Die Erfindung soll eine verbesserte Leitungsdurchführung angeben, die hinsichtlich der überbrückung geometrischer Toleranzen und/oder der Dichteigenschaften bei problematischen Oberflächen besonders leistungsfähig ist.

Hierzu richtet sich die Erfindung auf eine Leitungsdurchführung zum Aufbauen eines dichtenden Verschlusses einer von einer Leitung durchsetzten Öffnung in einer Wand mit einem PU-Elastomerkörper und einem PU-Gelkörper, die eine innige untrennbare Materialverbindung aufweisen, wobei der Gelkörper zur Anlage an eine Dichtfläche der Wand und/oder der Leitung ausgelegt ist.

Der Erfindung richtet sich ferner auf ein mit einer solchen Leitungsdurchführung ausgestaltetes technisches Gehäuse sowie auf bevorzugte Verwendungen der Leitungsdurchführung und schließlich auf ein Verfahren zur Herstellung der Leitungsdurchführung.

Die Grundidee der Erfindung besteht in der Kombination eines an sich vorbekannten Elastomerkörpers mit einem Gel und in der Verwendung speziell eines Elastomers auf Polyurethanbasis (PU) und gleichzeitig auch eines Gels auf Polyurethanbasis. Bei umfangreichen Versuchen hat sich herausgestellt, dass sich durch diese Kombination eine ganz besonders gute Materialverbindung herstellen lässt, die so innig ist, dass sie in der Praxis nicht aufgetrennt werden kann. Konkret bedeutet dies, dass bei zu großen mechanischen Beanspruchungen eher der Gelkörper zerstört wird, als dass sich der Gelkörper vollständig von dem Elastomerkörper löst, also die Material-verbindung selbst wieder zerstört wird. Diese Eigenschaft spielt für die Anwendungen im Leitungsdurchführungsbereich eine große Rolle, weil vor allem beim Durchstecken von Leitungen erhebliche mechanische Beanspruchungen auftreten können.

Darüber hinaus hat sich herausgestellt, dass speziell zwischen PU-Gelen und PU-Elastomeren auch ohne besondere Zwischenbehandlungen hervorragende Materialverbindungen hergestellt werden können, also ohne eigentliche zusätzliche Haftvermittter, ohne Coronabehandlungen oder Plasmabehandlungen oder besondere thermische Schritte zur Haftungsverbesserung, wie sie dem Fachmann in der Polymerwerkstofftechnik zur Verbesserung von Haftungseigenschaften vertraut sind. Solche Zwischenbehandlungen sind allerdings deswegen nicht ausgeschlossen.

Dabei soll der Gelkörper an zumindest eine abzudichtende Dichtfläche angelegt werden, d. h. an eine Dichtfläche der Wand und/oder eine Dichtfläche der Leitung, vorzugsweise allerdings an eine Leitungsdichtfläche. In diesem bevorzugten Fall soll der Elastomerkörper wiederum zur Anlage an der Wanddichtfläche ausgelegt sein.

Damit können flache oder auch dreidimensional ausgebildete Schichten, Fasern oder kugeldisperse Verbundwerkstoffstrukturen aufgebaut werden, wobei allerdings für die erwähnte Dichtfläche eine Gelkörperoberfläche vorgesehen sein soll. In allen Fällen eröffnet die Materialkombination zwischen einem Elastomer und einem Gel Werkstoffeigenschaften, die mit einfasigen Elastomeren aus dem Stand der Technik nicht erzielbar waren. Grundsätzlich stellt dabei der Elastomerkörper eine gute mechanische Belastbarkeit und Formstabilität und hohe Rückstellkräfte bzw. hohe mittlere Shorehärten zur Verfügung während das Gel ein besonders gutes Fließvermögen, insbesondere auch bei tiefen Temperaturen, und eine sehr gute Formanpassbarkeit auch an unregelmäßigen Oberflächen mit Einbuchtungen, Rissen, Kerben und ähnlichen eigentlich problematischen Strukturmerkmalen zeigt Das erfindungsgemäße PU-Gel wirkt bereits bei sehr geringen Vertormungskräften fast wie eine Flüssigkeit und legt sich daher besonders gut in Oberflächen unregelmäßigkeiten hinein. Die daraus resultierenden Dichtqualitäten sind mit Elastomeren nur bei sehr hohen Andruckkräften oder gar nicht zu erreichen.

Der Elastomerkörper kann seinerseits der beschriebenen Verformung des Gels Raum geben und dabei entsprechende Rückstellkräfte erzeugen. Das Gel verhält sich nämlich näherungsweise wie eine newtonsche Flüssigkeit, ist also im Wesentlichen inkompressibel, und damit durchaus in der Lage, Kräfte zu übertragen. Insbesondere zeigt das Gel nach Kompression ein sehr gutes Rückstellvermögen, sodass die Leitungsdurchführung nach dem Entfernen der Leitung im Wesentlichen den gleichen geometrischen Dichtbereich wie zuvor aufweist, jedenfalls keine wesentlichen Veränderungen zeigt. Elastomer hingegen leiden häufig unter dem Problem, kein ausreichendes Rückstellvermögen zur Verfügung zu stellen; sie zeigen nämlich einen sog. Druckverformungsrest.

Wie bereits erwähnt, soll der Gelkörper für die dichtende Anlage insbesondere an der Leitung verwendet werden. Vorzugsweise stützt dabei der Elastomerkörper den Gelkörper ab und bildet dabei in gewisser Weise einen Formschluss. Damit ist gemeint, dass der Elastomerkörper den Gelkörper in zumindest einer Richtung beidseitig umfasst und hält und damit zumindest einen Teil der mechanischen Grundstabilität des Elastomerkörpers auf den Gelkörper überträgt. Vorzugsweise ist dies nicht nur in einer Richtung, sondern in zwei Richtungen und besonders bevorzugter Weise allen Richtungen in einer Ebene der Fall, wie bei den Ausführungsbeispielen. Bei einem Ausführungsbeispiel gilt dies zudem für eine dritte Richtung senkrecht zu dieser Ebene.

Dabei soll der hier so bezeichnete Formschluss nicht an die Stelle der eigentlichen Materialverbindung treten, also nicht unzureichende Hafteigenschaften ausgleichen, sondern mit dem Elastomerkörper, der die größeren Rückstellkräfte aufbringt, gewissermaßen einen mechanischen Rahmen um das Gel herum zur Verfügung stellen.

Insbesondere ist bevorzugt, dass der Gelkörper in zwei zueinander senkrechten Richtungen und besonders bevorzugter Weise in allen Richtungen dieser Ebene von dem Elastomerkörper vollständig umschlossen ist, der Gelkörper also in einer Öffnung des Elastomerkörpers angeordnet ist und in dieser zum dichtenden Umgreifen der durchzuführenden Leitung vorgesehen ist. Dabei kann der Gelkörper vollständig innerhalb einer den Elastomerkörper von dessen Vorderseite bis zu dessen Rückseite durchsetzenden Öffnung vorgesehen und zwischen den diese Öffnung beidseits abschließenden Abschlusskanten des Elastomerkörpers angeordnet sein. In anderen Worten: Er steht nicht über die Öffnung hinaus. Auch hierzu wird auf die Ausführungsbeispiele verwiesen.

Die Elastomerkomponente kann durch entsprechende Dimensionierung unter eine gewisse Vorspannung gesetzt werden, etwa indem sie gegenüber der Wandöffnung eine Übermaß oder gegenüber der Leitung ein Untermaß aufweist (Letzteres unter Berücksichtigung des Gelkörpers). Damit werden für die Dichteigenschaften vorteilhafte elastomere Andruckkräfte vorgegeben.

Insbesondere wird der Kombinationswerkstoff zum Verschließen von Durchlassöffnungen verwendet, durch die ein Langkörper, beispielsweise ein Kabel, ein Rohr, ein Stab oder dergleichen geführt wird. Das bevorzugt die Außenoberfläche bildende Elastomermaterial kann dann eine Abdichtung zu den die Durchlassöffnung umgebenden, sie definierenden Oberflächen bilden, beispielsweise indem es durch eine radial wirkende Kraft von innen nach außen gedrückt wird. Das bevorzugt innen, nämlich in einer das Elastomermaterial durchgreifenden Öffnung, angeordnete Gel umgreift in dichtender Weise den Langkörper. Das Gel kann so ausgeführt sein, dass es selbst wiederum eine Öffnung für den Langkörper aufweist, wobei die Öffnung vorzugsweise einen kleineren Durchmesser aufweist als der Außendurchmesser des Langkörpers. Wird der Langkörper dann durch die Öffnung im Gel geschoben, drückt er das Gel nach außen. Da sich das Gel wie eine newtonsche Flüssigkeit verhält, wird es im Wesentlichen nicht komprimiert, sondern nach außen bewegt und drückt dabei das Elastomermaterial nach außen. Diese nach außen gerichtete, auf das Elastomermaterial wirkende Kraft kann dazu verwendet werden, das Elastomermaterial gegen die Oberflächen der Wandöffnung zu drückern und so durch Kraftschluss eine Dichtwirkung zu entfalten. Hierzu ist es von Vorteil, wenn die Vorrichtung nach außen als Elastomer wirkt. Das Elastomermaterial kann zusätzlich die Funktion der mechanischen Abstutzung des Langkörpers übernehmen. Gleichzeitig können die Rückstellkräfte des gedehnten Elastomermaterials bewirken, dass das Gel an dem Langkörper gut anliegt.

Bei einer besonders bevorzugten Ausgestaltung der Erfindung wird der Elastomerkörper hierbei von dem Gelkörper vollständig verschlossen, muss also der Gelkörper beim Durchstoßen einer Leitung erst geöffnet werden. Bei einer anderen, ebenfalls vorteilhaften Ausführung ist in dem Gelkörper bereits eine Öffnung vorhanden, die beim Durchführen der Leitung durchaus noch vergrößert werden kann.

Vorzugsweise ist der Gelkörper nicht besonders verhautet, weist also auch an der Oberfläche im Wesentlichen dieselben Materialeigenschaften wie im Volumen auf, und ist auch nicht in anderer Weise oberflächenbeschichtet, etwa mit einer Folie versehnen o. Ä. Vielmehr sollen die inhärenten Geleigenschaften gerade auch an der Oberfläche zu Tage treten und sollen sich diese bei erheblichen Verformungen des Gelkörpers auch nicht grundsätzlich ändern, etwa wenn eine Folie oder Haut gedehnt oder aufreißen würde.

Schließlich können in der erfindungsgemäßen Weise auch Leitungsdurchführungen aufgebaut werden, die eine Mehrzahl Leitungen berücksichtigen. Dies kann mit demselben Gelkörper geschehen; bevorzugt ist aber eine Ausführung mit einer entsprechenden Mehrzahl von Gelkörpern, die alle von demselben Elastomerkörper gehalten sind. Hinsichtlich der Ausführungsbeispiele muss man sich diese in einer Mehrzahl gewissermaßen parallel geschaltet nebeneinander vorstellen, wobei der Elastomerkörper einheitlich ausgeführt ist.

Eine ganz besonders bevorzugte Anwendung der Erfindung liegt bei technischen Gehäusen, insbesondere für elektrotechnische oder elektronische Geräte. Hier kann die Erfindung zum Abdichten von durch die Gehäusewand durchlaufenden Leitungen dienen. Die Erfindung richtet sich somit auch auf ein entsprechendes Gehäuse. Weitere bevorzugte Verwendungen wurden bereits genannt. Als Bauteilgehäuse werden dabei auch Gehäuse aus dem Gebiet der Handhabung von in Rohren geführten Fluiden verstanden, wie beispielsweise Pumpengehäuse, Pumpenschächte oder dergleichen.

Schließlich richtet sich die Erfindung, wie bereits festgestellt, auch auf ein Verfahren zur Herstellung der Leitungsdurchführung, bei dem die beschriebene innige und untrennbare Materialverbindung hergestellt wird. Dazu kann das Gel beispielsweise in noch nicht vollständig vernetztem Zustand an den Elastomerkörper gebracht werden, etwa aufgegossen werden, um dann in diesem Kontakt weiter zu vernetzen. Eine andere Möglichkeit besteht umgekehrt darin, zunächst einen Gelkörper herzustellen und den Elastomerkörper dann um den Gelkörper herum zu formen, etwa durch insbesondere druckloses Gießen oder einen Schäumprozess. Überhaupt sind hinsichtlich des Elastomerkörpers PU-Schäume bevorzugt.

Unter einem Gel wird ein chemisch oder physikalisch verknüpftes Polymernetzwerk verstanden, welches in einem Medium gequollen ist. Es besteht aus mindestens zwei Komponenten, die mehr oder weniger kontinuierlich in einem vorhandenen Volumen verteilt sind. In einer bevorzugten Ausführungsform dieser Erfindung sind die beiden Komponenten polymerchemisch identisch. Durch den Einsatz von Polyolen mit großer Funktionalitätenzahl und nicht abgesättigten Seitenketten, können letztere als Quellmedium fungieren. Beispielsweise können zwei bis drei von sechs vorhandenen funktionellen Gruppen reagiert sein, sodass drei bis vier verbleiben. Die Polyole bilden gemeinsam mit dem Isocyanaten eine polymere Grundstruktur, wobei die unreagierten Seitenketten einen integrierten Weichmacher bzw. das Quellmedium bilden.

Das Gel kann dabei eine hohe Elastizität und Festigkeit bzw. Zähigkeit bzw. Reißfestigkeit haben, sodass beim Durchstoßen des Gelkörpers oder einer Öffnung darin mit einer Leitung die Leitung umschlossen wird, aber nicht in zu großem Umfang oder möglichst gar nicht Bruchstücke des Gels mit geschleppt werden.

Als bevorzugte Polyolkomponenten und Isocyanatkomponenten für das PU-Material des Gelkörpers und das PU-Material des Elastomerkörpers können etwa Polyether-Polyole einerseits und aliphatische oder aromatische Di- bzw. Oligoisocyanate andererseits verwendet werden. Dabei sind insbesondere hochfunktionelle Polyether-Polyole, etwa solche mit einer Funktionalitätenzahl zwischen 3 und 6, bevorzugt. Im Falle des Gels lässt sich über die Dosierung der Isocyanatkomponente erreichen, dass nur ein Teil der zur Verfügung stehenden funktionellen Gruppen reagiert und Polyolseitenketten beweglich bleiben.

Bevorzugte Ausgestaltungen sind in den abhängigen Ansprüchen angegeben und werden neben den Grundideen der Erfindung im Folgenden erläutert. Die Beschreibung bezieht sich dabei implizit stets sowohl auf die Vorrichtungs-, Verfahrens- als auch Verwendungskategorie, ohne dass zwischen den Kategorien noch explizit unterschieden wird.

Nachfolgend wird die Erfindung anhand einer lediglich Ausführungsbeispiele der Erfindung darstellenden Zeichnung näher erläutert, wobei die einzelnen Merkmale auch in anderen Kombinationen erfindungswesentlich sein können und sich, wie bereits erwähnt, implizit auf alle Kategorien der Erfindung beziehen. Darin zeigt
- Figur 1: eine geschnittene Ansicht eines Teils einer erfindungsgemäßen Leitungs- durchführung, bei der das Gel und das Elastomermaterial an einer Kontakt- oberfläche eine innige Verbindung bilden und der Gelkörper zusätzlich teil- weise formschlüssig in einer Ausnehmung des Elastomerkörpers abgestützt ist;
- Figur 2: eine geschnittene Ansicht eines Teils des Elastomerkörpers und des in einer Öffnung des Elastomerkörpers vorgesehenen Gelkörpers einer erfindungs- gemäßen Leitungsdurchführung;
- Figur 3: den Teil des Elastomerkörpers und des in einer Öffnung des Elastomerkör- pers vorgesehenen Gelkörpers der erfindungsgemäßen Leitungsdurchfüh- rung nach Figur 2 mit einem durch eine Öffnung des Gelkörpers durchge- führten Langkörper und
- Figur 4: ein erfindungsgemäßes Bauteilgehäuse in einer perspektivischen Ansicht.

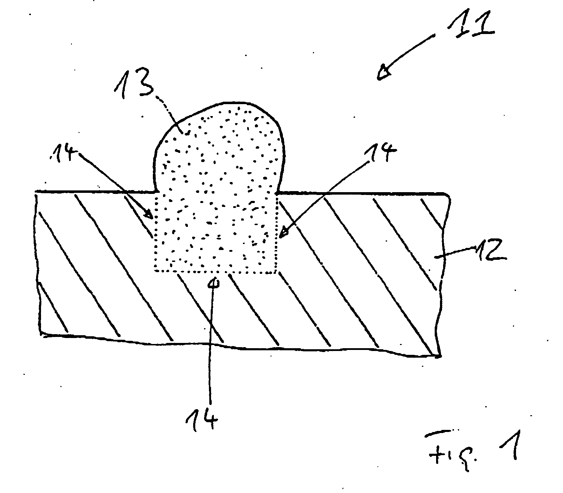

In Figur 1 ist ein Teil einer erfindungsgemäßen Leitungsdurchführung 11 in einer geschnittenen Ansicht gezeigt. Dargestellt sind ein Teil des Elastomerkörpers 12 der Leitungsdurchführung 11 und der Gelkörper 13. Zwischen dem Elastomerkörper 12 und dem Geikörper 13 besteht an einer Kontaktoberfläche 14 eine innige Verbindung. Diese innige Verbindung wird durch die punktierten Linien dargestellt. Der Gelkörper 13 wird zusätzlich mit einem Randbereich 14 in einer Ausnehmung des Elastomerkörpers 12 abgestützt.

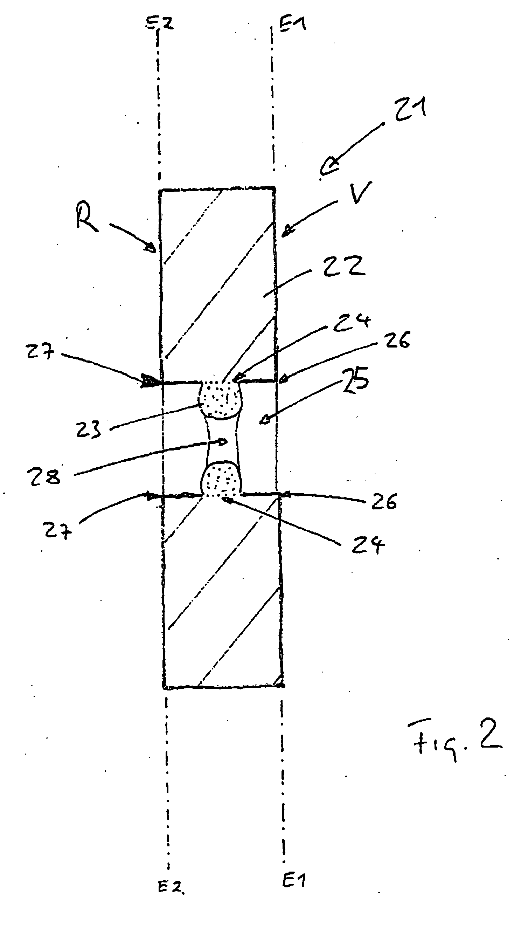

Figur 2 zeigt eine Leitungsdurchführung 21 zum Abdichten eines (nicht dargestellten) Kabel- oder Rohrauslass eines (ebenfalls nicht dargestellten) Bauteilgehäuses. Dargestellt sind der Elastomerkörper 22 und der Gelkörper 23. An der Kontaktoberfläche 24 zwischen dem Elastomerkörper 22 und dem Gelkörper 23 besteht eine innige Verbindung, jedoch ohne Ausnehmung. Der Elastomerkörper 22 weist eine Öffnung 25 auf. Die Öffnung 25 führt von der Vorderseite V des Elastomerkörpers 22 zu dessen Rückseite R und wird durch Wände begrenzt, die an der Vorderseite und der Rückseite jeweils eine umlaufende Abschlusskante 26, 27 bilden, sodass ein Öffnungsraum gebildet wird, der sich von der Ebene E1, in der die Abschlusskante 26 an der Vorderseite V liegt, zu der Ebene E2, in der die Abschlusskante 27 an der Rückseite R liegt, erstreckt, wobei der Gelkörper 23 in diesem Öffnungsraum angeordnet ist.

In dem Gelkörper 23 ist eine Öffnung 28 zum Durchführen eines Langkörpers, beispielsweise eines Kabels oder eines Rohrs, vorgesehen.

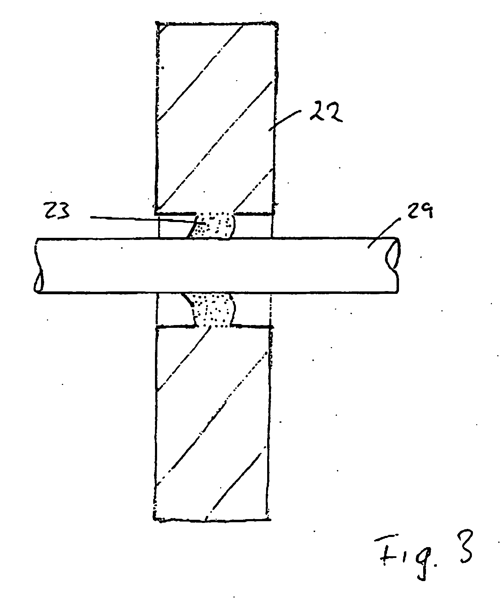

Figur 3 zeigt die Vorrichtung nach Figur 2 mit einem durch die Öffnung 28 durchgeschobenen Langkörper 29. Der Langkörper 29 weist einen Außendurchmesser auf, der größer ist als der Durchmesser der Öffnung 28. Durch den eingeführten Langkörper 29 wird das Gel des Gelkörpers 23 senkrecht zur Längsachse des Langkörpers, also in Richtung auf den Elastomerkörper 22 weggedrückt. Der Elastomerkörper 22 gibt dieser Bewegung des Gelkörpers 23 elastisch nach. Der Gelkörper 23 drückt den Elastomerkörper 22 somit nach außen, so dass dieser an seinem Außenumfang gegen die Wandung des (nicht dargestellten) Kabel- und Rohrauslasses gedrückt wird. Hierdurch wird durch Kraftschluss eine Dichtwirkung erzeugt. Gleichzeitig übt der Elastomerkörper 22 eine Rückstellkraft auf den Gelkörper 23 aus, die zusammen mit der eigenen Rückstellkraft des Gelkörpers 23 zu einer dichtenden Anlage des Gelkörpers 23 an dem Außenumfang des Langkörpers 29 führt.

Wenn der Gelkörper abweichend von Figur 2 geschlossen zylindrisch und ohne Öffnung 28 ausgeführt wird und der Langkörper 29 hindurch gedrückt wird, ergibt sich ein analoges Bild zu Figur 3, wobei die Elastomerkörperöffnung 25 ohne Leitung verschlossen bleibt.

Man erkennt in Figur 2 und 3, dass der Elastomerkörper 22 den Gelkörper 23 an dessen Umfang hält und damit bzgl. aller radial nach außen weisenden Richtungen stützt. In der axialen Richtung besteht allerdings kein Formschluss. Dieser ist bei einer Ausführung nach Figur 1 zusätzlich gegeben, weil dort der Gelkörper 13 in die Ausnehmung des Elastomerkörpers 12 eingreift.

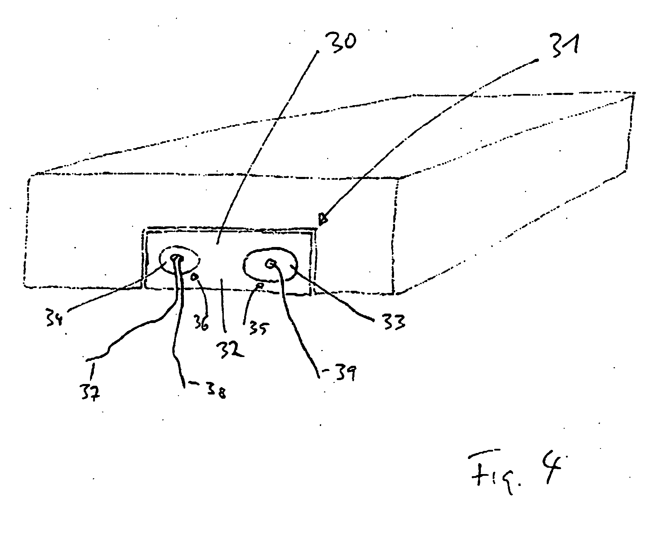

Figur 4 zeigt eine Vorrichtung 30 zum Abdichten eines Kabel- oder Rohrauslasses 31. Die Vorrichtung 30 weist einen Elastomerkörper 32 mit zwei Gelkörpern 33, 34 auf. Der Gelkörper 33 ist in einer Öffnung 35 des Elastomerkörpers 32 und der Gelkörper 34 in einer Öffnung 36 des Elastomerkörpers 32 angeordnet. Durch die Gelkörper 33, 34 sind Kabel 37, 38, 39 geführt, mit denen die entsprechenden Öffnungen in den Gelkörpern 33, 34 erst erzeugt wurden. Dazu wurden die Kabel 37, 38, 39 axial unter Krafteinsatz durch die Gelkörper 33, 34 durchgestossen. Der Elastomerkörper 32 weist eine Außenkontur auf, die im Wesentlichen den Abmessungen des Kabel- oder Rohrauslasses 31 entspricht. Dadurch verschließt der Elastomerkörper 32 den Kabel- oder Rohrauslass 31.

Die vorstehend beschriebenen Leitungsdurchführungen werden materialtechnisch wie folgt hergestellt.

Zunächst werden für das Gel als Polyolkomponente folgende flüssige Substanzen miteinander vermischt:
- 50 Gewichtsteile eines trifunktionellen Polyetherpolyols auf der Basis von Propylenoxid mit endständigem Ethylenoxid mit einem Molekulargewicht von 6000.
- 50 Gewichtsteile eines trifunktionellen Polyetherpolyols auf der Basis von Propylenoxid mit endständigem Ethylenoxid mit einem Molekulargewicht von 4800.
- 0,2 Gewichtsteile eines handelsüblichen Wismut-Katalysators (Coscat 83).
- 0,5 Gewichtsteile Moltopren (Bayer AG) Schwarzpaste N (zum Färben).

Die Polyolkomponente wird mit 13,5 Gewichtsteilen eines modifizierten Diphenymethandiisocyanats ("MDI", wobei sog. polymeres MDI mit inbegriffen sein soll, obwohl es streng genommen kein MDI ist) mit einem NCO Gehalt von 12 % zur Umsetzung gebracht.

Die beiden Komponenten werden mittels einer herkömmlichen Niederdruckmaschine miteinander vermischt und anschließend in eine offene Form eingebracht. Die Form aus Aluminium umschließt einen dickwandige Hohlzylinder, der durch die flüssige reagierende Masse ausgefüllt wird. Die Wände der Form sind mit einem trennfreundlichen Kunststoff (Teflon) beschichtet. Nach etwa 5 Minuten wird der fertige Gelkörper entnommen.

Das weiche Gel hat eine Shore 000 Härte von etwa 65. Es ist hochelastisch mit einer Bruchdehnung von mehr als 300 %. Dabei sind Shore 000 Härten von mindestens 50, 55 und besonders bevorzugter Weise mindestens 60 und von höchstens 70 und besonders bevorzugter Weise höchstens 65 von Vorteil.

Das Gel wird in eine Form eingelegt und bildet den inneren Raum einer zweiten zylindrischen Form. Die zweite Form ist teilweise geschlossen.

Ein flüssiges reaktionsfähiges Elastomergemisch wird mit einer zweiten Niederdruckmaschine vermischt und zur Herstellung des Elastomerkörpers in die zweite Form gegossen.

Die Polyolkomponente besteht aus 100 Gewichtsteilen eines trifuntionellen Polyetherpolyols mit einer OH Zahl von 28, 7 Gewichtsteilen Butandiol, 1 Gewichtsteil Triethylendiamin (33%ig in Monoethylenglykol) sowie 0,2 Gewichtsteilen Dibutlyzinndilaurat.

Die Isocyanatkomponente, die mit der Polyolkomponente vermischt wird, ist ein difunktionelles modifiziertes MDI mit einem NCO Gehalt von 23%. Das resultierende Elastomer hat eine Shore A Härte von etwa 60. Dabei sind Shore A Härten von mindestens 45, 50, 55 und besonders bevorzugter Weise mindestens 60 und von höchstens 70 und besonders bevorzugter Weise höchstens 65 von Vorteil.

Die erfindungsgemäße Leitungsdurchführung erlaubt eine sehr gute Anpassung an verschiedene Leitungsdurchmesser, ohne dass dabei durch unterschiedlich ausgeprägte Dehnungen reiner Elastomermembranen Risiken hinsichtlich Druckdichtigkeit oder mechanischer Festigkeit bestehen oder zur Vermeidung solcher Schwierigkeiten Elastomerteile leitungsmaßabhängig ausgetauscht werden müssten.

Der Elastomerkörper übernimmt die Abdichtung nach außen zu der Wandöffnung bzw. deren Laibung hin, etwa in einer Einführungsplatte eines Gerätegehäuses, und dient zur mechanischen Abstutzung der Leitung. Der Gelkörper dient zur Durchmesseranpassung an die tatsächlich durchgeführte Leitung und zur Abdichtung gegenüber der Leitung. Er dehnt sich nach Bedarf aus und stützt sich dabei an dem E-lastomertcörper ab, der sich, falls notwendig, mit ausdehnen kann. Nach erfolgtem Leitungseinzug wirken die Rückstellkräfte des Elastomerkörpers, verteilt durch den angeschmiegten Gelkörper, auf die Leitung, etwa das Kabel.

Das verwendete Gel stellt sich nach Kompression fast vollständig wieder zurück, sodass die Leitungsdurchführung nach dem Entfernen der Leitung ihren Dichtbereich beibehalt. Beispielsweise kann die Leitung einen Außendurchmesser von 30 mm bei einer vorherigen Öffnung im Gel von nur 10 mm aufweisen. Die Leitungen müssen lediglich eingeschoben werden. Die Ausführungsbeispiele können auch teilbar ausgeführt sein, etwa in zwei Hälften. Die niedrige Shorehärte des PUR-Gels erlaubt eine entsprechende Ausdehnung. Eingeführte Kabel konnten selbst bei Temperaturen von - 20 °C noch bewegt werden, ohne dass Undichtigkeiten auftraten.

Man kann sich die Ausführungsbeispiele auch für mehrere Leitungen quasi parallel geschaltet vorstellen, wobei dann in einem Elastomerkörper eine Mehrzahl Öffnungen mit jeweils einem Gelkörper vorgesehen sind.

## Patentansprüche

1. Leitungsdurchführung (11, 21, 30) zum Aufbauen eines dichtenden Verschlusses einer von einer Leitung (29, 37 - 39) durchsetzten Öffnung in einer Wand mit
einem PU-Elastomerkörper (12, 22, 32) und
einem PU-Gelkörper(13, 23, 33, 34),
die eine innige untrennbare Materialverbindung (14, 24) aufweisen,
wobei der Gelkörper (13, 23, 33, 34) zur Anlage an eine Dichtfläche der Wand und/oder der Leitung (29, 37 - 39) ausgelegt ist.

2. Leitungsdurchführung (11, 21, 30) nach Anspruch 1, bei der der Gelkörper (13, 23, 33, 34) zur Anlage an einer Dichtfläche der Leitung (29, 37 - 39) und der Elastomerkörper (12, 22, 32) zur Anlage an einer Dichtfläche der Wand ausgelegt ist.

3. Leitungsdurchführung (11, 21, 30) nach Anspruch 1 oder 2, bei der der Elastomerkörper (12, 22, 32) den Gelkörper (13, 23, 33, 34) in zumindest einer Richtung beidseits umfasst und hält, vorzugsweise in zwei und besonders bevorzugter Weise in drei zueinander senkrechten Richtungen.

4. Leitungsdurchführung (11, 21. 30) nach einem der vorstehenden Ansprüche, bei der der Gelkörper (13, 23, 33. 34) innerhalb einer Öffnung (25, 35, 36) des Elastomerkörpers (12, 22, 32) angeordnet und zum dichtenden Umgreifen der Leitung (29, 37 - 39) ausgelegt ist und der Elastomerkörper (12, 22, 32) die Öffnung (25, 35, 36) in zwei zueinander senkrechten Richtungen vollständig umschließt.

5. Leitungsdurchführung (11, 21, 30) nach Anspruch 4, bei der die Öffnung (25, 35, 36) von der Vorderseite (V) des Elastomerkörpers (12, 22, 32) zu dessen Rückseite (R), jeweils in Leitungsrichtung gesehen, führt und der Elastomerkörper (12, 22, 32) an der Vorderseite (V) und der Rückseite (R) jeweils eine umlaufende Abschlusskante (26, 27) bildet, wobei der Gelkörper (13, 23, 33, 34) in dem Öffnungsraum und zwischen den Abschlusskanten (26, 27) angeordnet ist.

6. Leitungsdurchführung (30) nach Anspruch 5, bei der der Gelkörper (33, 34) die Öffnung (35, 36) vollständig verschließt.

7. Leitungsdurchführung (11, 21, 30) nach einem der vorstehenden Ansprüche, bei der der Gelkörper (13, 23, 33, 34) von dem Elastomerkörper (12, 22, 32) abgesehen weder eine Gbertlächenbeschichtung noch eine sich von dem Volumenmaterial des Gelkörpers (13, 23, 33, 34) wesentlich unterscheidende Haut aufweist.

8. Leitungsdurchführung (30) nach einem der vorstehenden Ansprüche, die genau einen zusammenhängenden Elastomerkörper (32) und eine Mehrzahl jeweils zusammenhängende, aber von einander getrennte Gelkörper (33, 34) aufweist.

9. Technisches Gehäuse mit einer Wand, in der sich eine Wandöffnung (31) befindet, in der eine Leitungsdurchführung (30) nach einem der vorstehenden Ansprüche verbaut ist.

10. Verwendung einer Leitungsdurchführung (11, 21, 30) nach einem der Ansprüche 1 - 8 für ein technisches Gehäuse, insbesondere eines elektrischen oderelektronischen Geräts, für die Wand eines Gebäudes, insbesondere zur Durchführung von Signalleitungen, elektrischen Versorgungsleitungen oder Fluidleitungen, oder für eine Wand in einem Verkehrsmittel, insbesondere einem Schiff.

11. Verfahren zur Herstellung einer Leitungsdurchführung (11, 21, 30) nach einem der Ansprüche 1 - 8, bei dem ein PU-Elastomerkörper (12, 22, 32) und ein PU-Gelkörper (13, 23, 33, 34) so hergestellt werden, dass diese eine innige untrennbare Materialverbindung (14, 24) aufweisen, wobei der Gelkörper (13, 23, 33, 34) zur Anlage an eine Dichtfläche der Wand und/oder der Leitung (29, 37-39) ausgelegt ist.

12. Verfahren nach Anspruch 11, bei der das Gel des Gelkörpers (13, 23, 33, 34) in noch nicht völlig vernetztem Zustand in Kontakt mit dem Elastomerkörper (12, 22, 32) gebracht wird, insbesondere aufgegossen wird, und daraufhin an der Kontaktoberfläche des Elastomerkörpers (12, 22, 32) teilweise weiter oder völlig vernetzt.

13. Verfahren nach Anspruch 11, bei dem der Elastomerkörper (12, 22, 32) um den Gelkörper (13, 23, 33, 34) gegossen, insbesondere drucklos gegossen, oder geschäumt wird.

14. Verfahren nach einem der Ansprüche 11 -13, bei dem zwei Komponenten des PU-Gelkörpers (13, 23, 33, 34) polymerchemisch identisch sind.

15. Verfahren nach einem der Ansprüche 11 - 14, bei dem Polyether-Polyole als Polyolkomponenten mit aliphatischen oder aromatischen Di- bzw. Oligoisocyanaten als Isocyanatkomponenten vermischt werden.

## Claims

1. A conduit duct (11, 21, 30) for setting up a sealing of an opening in a wall penetrated by a conduit (29, 37 - 39) having
a PU-elastomer body (12, 22, 32) and
a PU-gel body (13, 23, 33, 34),
which present an intimate inseparable material junction (14, 34),
wherein said gel body (13, 23, 33, 34) is adapted for contacting a sealing surface of said wall and/or said conduit (29, 37 - 39).

2. The conduit duct (11, 21, 30) according to claim 1, wherein said gel body (13, 23, 33, 34) is adapted for contacting a sealing surface of said conduit (29, 37 - 39) and said elastomer body (12, 22, 32) is adapted for contacting a sealing surface of said wall.

3. The conduit duct (11, 21, 30) according to claim 1 or 2, wherein said elastomer body (12, 22, 32) embraces and holds said gel body (13, 23, 33, 34) in at least one direction on both sides, preferably in two and particularly preferred in three directions perpendicular to each other.

4. The conduit duct (11, 21, 30) according to one of the preceding claims, wherein said gel body (13, 23, 33, 34) is placed within an opening (25, 35, 36) of said elastomer body (12, 22, 32) and is adapted for sealingly enclosing said conduit (29, 37 - 39), and wherein said elastomer body (12, 22, 32) encloses said opening (25, 35 ,36) completely in two directions perpendicular to each other.

5. The conduit duct (11, 21, 30) according to claim 4, wherein said opening (25, 35, 36) extends from the front face (V) of said elastomer body (12, 22, 32) to its back (R) seen in conduit direction, respectively, and said elastomer body (12, 22, 32) forms a circumferential rim (26, 27) at said front face (V) and said back (R), respectively, wherein said gel body (13, 23, 33, 34) is placed in the space of said opening (25, 35, 36) and between said rims (26, 27).

6. The conduit duct (30) according to claim 5, wherein said gel body (33, 34) occludes said opening (35, 36) completely.

7. The conduit duct (11, 21, 30) according to one of the preceding claims, wherein said gel body (13, 23, 33, 34) has, apart from said elastomer body (12, 22, 32), neither a surface coating nor a skin differing significantly from the bulk material of said gel body (13, 23, 33, 34).

8. The conduit duct (30) according to one of the preceding claims, which comprises exactly one continous elastomer body (32) and a plurality of gel bodies (33, 34) being continous, respectively, but separated from each other.

9. A technical housing with a wall and a wall opening (31) in said wall, in which a conduit duct (30) according to one of the preceding claims is built-in.

10. A use of a conduit duct (11, 21, 30) according to one of claims 1 - 8, for a technical housing, in particular of an electric or electronic device, for a wall of a building, in particular for leading through signal lines, electrical supply lines or fluid conduits, or for a wall in a means of transport, in particular in a ship.

11. A method of manufacturing a conduit duct (11, 21, 30) according to one of claims 1 - 8, wherein a PU-elastomer body (12, 22, 32) and a PU-gel body (13. 23, 33, 34) are manufactured in such a way that they present an intimate inseparable material junction, wherein said gel body (13, 23, 33, 34) is adapted for contacting a sealing surface of said wall and/or said conduit (29, 37-39).

12. The method according to claim 11, wherein the gel of said gel body (13, 23, 33, 34) is brought together with said elastomer body (12, 22, 32) in a state of not being cross-linked completely yet, particularly is casted onto said elastomer body (12, 22, 32) and subsequently cross-linked further partly or completely at the contact surface of said elastomer body (12, 22, 32).

13. The method according to claim 11, wherein said elastomer body (12, 22, 32) is casted around said gel body (13, 23, 33, 34), particularly unpressurized, or is foamed.

14. The method according to one of claims 11 -13, wherein two constituents of said PU-gel body (13, 23, 33, 34) are identical in terms of polymer chemistry.

15. The method according to one of claims 11 - 14, wherein polyether-polyols are mixed as polylol constituents with aliphatic or aromatic di- and/or oligoisocyanates as isocyanate constituents.

## Revendications

1. Passage de conduite (11, 21, 30) pour la construction d'un dispositif de fermeture étanche d'une ouverture traversée par une conduite (29, 37 - 39) dans une paroi comprenant
un corps élastomère en PU (12, 22, 32) et
un corps de gel en PU (13, 23, 33, 34),
qui présentent une liaison de matériau (14, 24) intime inséparable, sachant que le corps de gel (13, 23, 33, 34) est conçu pour s'appuyer sur une surface d'étanchéité de la paroi et/ou de la conduite (29, 37 - 39).

2. Passage de conduite (11, 21, 30) selon la revendication 1, dans lequel le corps de gel (13, 23, 33. 34) est conçu pour s'appuyer sur une surface d'étanchéité de la conduite (29, 37 - 39) et le corps élastomère (12, 22, 32) pour s'appuyer sur une surface d'étanchéité de la paroi.

3. Passage de conduite (11, 21, 30) selon la revendication 1 ou 2, dans lequel le corps élastomère (12, 22, 32) entoure et maintient des deux côtés le corps de gel (13, 23, 33, 34) dans au moins une direction, de préférence dans deux et particulièrement de préférence dans trois directions verticales l'une à l'autre.

4. Passage de conduite (11, 21, 30) selon l'une des revendications précédentes, dans lequel le corps de gel (13, 23, 33, 34) est placé à l'intérieur d'une ouverture (25, 35, 36) du corps élastomère (12, 22, 32) et est conçu pour mettre en prise la conduite (29, 37 - 39) en l'entourant pour la rendre étanche, et le corps élastomère (12, 22, 32) entoure complètement l'ouverture (25, 35, 36) dans deux directions verticales l'une à l'autre.

5. Passage de conduite (11, 21, 30) selon la revendication 4, dans lequel l'ouverture (25, 35, 36), part depuis la face avant (V) du corps élastomère (12, 22, 32) vers sa face arrière (R), vue respectivement dans la direction de la conduite, et le corps élastomère (12, 22, 32) forme sur la face avant (V) et la face arrière (R) une arête de finition respective (26, 27), sachant que le corps de gel (13, 23, 33, 34) est placé dans l'espace d'ouverture et entre les arêtes de finition (26, 27).

6. Passage de conduite (30) selon la revendication 5, dans lequel le corps de gel (33, 34) ferme complètement l'ouverture (35, 36).

7. Passage de conduite (11, 21, 30) selon l'une des revendications précédentes, dans lequel le corps de gel (13, 23, 33, 34), excepté le corps élastomère (12, 22, 32), ne forme ni un revêtement de surface, ni une enveloppe se différenciant essentiellement du matériau volumique du corps de gel (13, 23, 33, 34).

8. Passage de conduite (30) selon l'une des revendications précédentes, qui présente précisément un corps élastomère (32) contigu et une pluralité de corps de gel (33, 34) solidaires respectifs mais séparés les uns des autres.

9. Boitier technique comprenant une paroi, dans lequel se trouve une ouverture de paroi (31), dans laquelle un passage de conduite (30) est monté selon l'une des revendications précédentes.

10. Utilisation d'un passage de conduite (11, 21, 30) selon l'une des revendications 1 à 8 pour un boitier technique, en particulier d'un appareil électrique ou électronique, pour le mur d'un bâtiment, en particulier pour faire passer des lignes de signal, des lignes d'alimentation électrique ou des conduites de fluides, ou pour une paroi dans un moyen de transport, en particulier un bateau.

11. Procédé de fabrication d'un passage de conduite (11, 21, 30) selon l'une des revendications 1 à 8, dans lequel un corps élastomère en PU (12, 22, 32) et un corps de gel en PU (13, 23, 33, 34) sont ainsi fabriqués que ceux-ci présentent une liaison de matériau (14, 24) intime inséparable, sachant que le corps de gel (13, 23, 33, 34) est conçu pour s'appuyer sur une surface d'étanchéité de la paroi et/ou de la conduite (29, 37 - 39).

12. Procédé selon la revendication 11, dans lequel le gel du corps de gel (13, 23, 33, 34) est amené dans un état non encore complètement réticulé en contact avec le corps élastomère (12, 22, 32), est notamment coulé, et est ensuite partiellement ou totalement réticulé sur la surface de contact du corps élastomère (12, 22, 32).

13. Procédé selon la revendication 11, dans lequel le corps élastomère (12, 22, 32) est coulé, en particulier coulé sans pression, ou moussé autour du corps de particules gélifiées (13, 23, 33, 34).

14. Procédé selon l'une des revendications 11 à 13, dans lequel deux composants du corps de gel en PU (13, 23, 33, 34) sont identiques au niveau de la chimie des polymères.

15. Procédé selon l'une des revendications 11 à 14, dans lequel des polyols de polyéther en tant que composants polyols sont mélangés à des di-respectivement oligoisocyanates aliphatiques ou aromatiques en tant que composants isocyanates.
